# EUROPEAN PATENT SPECIFICATION

(11) **EP 3 188 602 B1**
(45) Date of publication and mention of the grant of the patent: **11.04.2018**
(21) Application number: 15756913.8
(22) Date of filing: 01.09.2015
(51) Int. Cl.: A23C 19/10, A23C 19/11, A23C 19/05, A23C 19/076, A23C 19/068

(54) **PROCESS TO PRODUCE A MICROBIOLOGICALLY STABLE FRESH CHEESE**
VERFAHREN ZUR HERSTELLUNG EINES MIKROBIOLOGISCH STABILEN KÄSES
PROCÉDÉ DE PRODUCTION DE FROMAGE MICROBIOLOGIQUEMENT STABLE

(30) Priority: 05.09.2014 EP 14183687
(43) Date of publication of application: 12.07.2017
(73) Proprietor: DSM IP Assets B.V., 6411 TE Heerlen (NL)
(72) Inventor: HAAN, DE, Ben Rudolf, NL-6100 AA Echt (NL)
(74) Representative: DSM Intellectual Property
(86) International application number: PCT/EP2015/069886
(87) International publication number: WO 2016/034549

(56) References cited:
- AU-B2- 2011 253 811
- US-A- 4 374 152
- US-A1- 2014 023 762

## Description

### Field of the invention

The invention relates to a process to produce a curd or a fresh cheese, to a curd or fresh cheese obtainable by said process, to a composition comprising a rennet and a natamycin, and to the use of said composition.

### Background of the invention

Fresh cheeses are unripened cheeses. They are made by coagulation of milk, either by adding a rennet or by acidification (citric acid, lactic acid, acetic acid), or by a combination of acid and heat. Examples of fresh cheeses are fromage frais, fromage blanc, labneh, cream cheese, curd cheese, farmer cheese, queso fresco, queso blanco, quarg, paneer, fresh goat's milk chèvre, Petit Suisse, Neufchatel, cottage cheese, mascarpone, and buffalo cheese.

The production of fresh cheese is relatively simple in that it involves curdling of milk and draining the whey. Cultures may be added. In contrast to hard cheeses, fresh cheeses do not undergo a firm pressing step; some mild form of pressing may be applied in order to squeeze out whey, but the pressing is always less than in the production of hard cheese. Typically, the whey is removed by just draining. An important characteristic of fresh cheeses is that they do not have a rind. They are typically consumed when fresh, typically within one month of production.

As any dairy product, fresh cheeses are susceptible by contamination with mould and yeast and must therefore be stabilized. On hard cheese such as Gouda a preservative can be effectively applied at the surface (see e.g. US 2014/023762). For example, DelvoCoat is a natamycin-based polyvinylacetate coating, commercially obtainable by DSM Food Specialties. See also C.B.G. Daamen & G. van den Berg "Prevention of mould growth on cheese by means of natamycin" Voedingsmiddelentechnologie, 1985, 18 (2), 26-29.

Alternatively, a cheese can be treated by dipping or spraying with a suspension of natamycin in water (C.B.G. Daamen & G. van den Berg "Prevention of mould growth on cheese by means of natamycin" Voedingsmiddelentechnologie, 1985, 18 (2), 26-29; H.A. Morris & H.B. Castberg "Control of surface growth on blue cheese using pimaricin", Cultured Dairy Products Journal, 1980, 15 (2), 21-23; P. Baldini, F. Palmia, R.G. Raczynski, M. Campanini, "Use of pimaricin for preventing mould growth on Italian cured meat products", Industria Conserve, 1979, 54 (4), 305-307; R.A. Holley, "Prevention of surface mould growth on Italian dry sausage by natamycin and potassium sorbate", Appl. Environ. Microbiol., 1981, 41 (2). An example of a liquid-formulated natamycin is DelvoCoat L, also obtainable by DSM Food Specialties.

Because fresh cheeses do not have a rind, applying the preservative as a coating is not possible. Because they have no firm structure, dipping is also less practical. This leaves application by spraying. In CN102715249 (A) is disclosed the production of buffalo cheese wherein an aqueous natamycin solution (of 36 ppm) is evenly sprayed on the cheese surface, i.e. after curd has been formed. A disadvantage of this process is that it results in substantial loss of the natamycin because part of the sprayed natamycin drips off of the cheese. Another disadvantage of spraying is that only the outside receives the natamycin, leaving the inside unprotected.

It is an aim of the invention to overcome one or more of the problems described above.

### Detailed description of the invention

In one aspect the invention provides a process to produce a fresh cheese said process comprising the step of adding natamycin, characterized in that at least part of the natamycin is added to milk before curd formation.

Curd formation may comprise adding a rennet or acidification, typically by adding an acid, such as citric acid, lactic acid, acetic acid, or by acid / heat combination. A combination of acidification and a rennet is also possible (see e.g. US 4,374,152).

Natamycin is a natural preservative, which is produced by fermentation using *Streptomyces natalensis.* It is widely used throughout the world as a food preservative and has a long history of safe use in the food industry. It is very effective against all known food spoilage by fungi. Although natamycin has been applied for many years in e.g. the cheese industry, up to now development of resistant fungal species has never been observed.

In an embodiment the fresh cheese in the process of the invention is a rindless cheese. The process of the invention is particularly suitable to produce fromage frais, fromage blanc, labneh, curd cheese, farmer's cheese, queso fresco, mozzarella, quark (also referred to as quarg), queso blanco, paneer, fresh goat's milk chèvre, Petit Suisse, cottage cheese, mascarpone, buffalo cheese, cream cheese, cas, pasta filata, feta, cotija, oaxaca, panela, halloumi, ricotta, and pot cheese.

The production of fresh cheese is known to the skilled person and is described for example in "Fresh acid-curd cheese varieties", T.P Guiness, P.D. Pudja, and N.Y. Farkye; a chapter in: "Cheese: Chemistry, physics, and microbiology" Volume 2: Major Cheese Groups, P.F. Fox, editor, p. 365. The milk may be from cow, buffalo, sheep, goat, camel, and lama.

The inventor has surprisingly found that if natamycin is added to the milk before curd formation, in contrast to known methods (i.e. M.L. Tortorello et al., "Extending the shelf-life of cottage cheese: identification of spoilage flora and their control using food grade preservatives", Cultured Dairy Products Journal (1991) 26(4), 8/09,11/12 or J. Farkas et al., "The effect of pimaricin on the microbial flora of cottage cheese in plastic packaging", Acta Alimentaria (1976) 5(2), 107-118) wherein natamycin is added after curd formation, natamycin preferentially accumulates in the curd. One would expect natamycin to distribute evenly over the curd and the whey fraction, leading to the same concentration in the curd and the whey. Instead, the concentration of natamycin in the curd was found to be much higher than the concentration in the whey fraction. In fact, natamycin is *enriched* in the curd. Another way of looking at this is that natamycin is *targeted* to the curd. This results in reduced loss of natamycin as compared to spraying or dripping, and a corresponding higher yield in the final cheese. Another advantage is that natamycin is distributed throughout the curd or the final cheese.

The process of the invention is particularly suitable to produce a microbiologically stable fresh cheese. With "microbiologically stable" is meant no outgrowth of yeast or mold, for at least about 4 weeks days at 20°C or at an extended shelf life chilled temperature (i.e. 4-8°C), or reduced or delayed outgrowth in comparison to untreated cheese. Microbiologically stable is understood to include microbiologically safe.

In production of fresh cheese, milk is converted to curd which in turn is made into cheese. The skilled person appreciates that there is often no clear transition between milk and curd and between curd and cheese, particularly in young cheese. This is not crucial for the invention, as natamycin is added to the milk prior to curd formation, when no curd or cheese have been formed. It is important that little or no curd has been formed at the time when natamycin is added to the milk. Once curd formation has started, natamycin no longer appears to preferentially accumulate in the curd fraction.

The skilled person knows how to add natamycin to milk. In the context of the invention, "adding natamycin to milk" encompasses any contacting of milk to natamycin. Adding milk to natamycin and adding natamycin to milk are understood to be the same step. Natamycin can be dosed through a pipe to the vessel containing the milk, or simply poured from a container. Before and/or during adding rennet or acid, the milk may be stirred in order to obtain an even distribution of natamycin.

The skilled person knows when curd formation takes place and thus when to add natamycin. Natamycin is preferably added to the milk before formation of lumps is observed. Curd formation is visible by tangling of the milk to form lumps of solid masses, or curds.

In an embodiment natamycin is added to the milk prior to adding a rennet or acid. Once natamycin is added to the milk, the cheese production can proceed immediately, that is, rennet or acid can be added right after adding natamycin. Alternatively, the milk can be stored until cheese making starts or proceeds, at the convenience of the cheese maker.

In a further embodiment natamycin is added to the milk together with a rennet or acid. They can be added to the milk separately (but concomitantly) or as part of the same stream. An advantage of the latter option is that it saves equipment and at least one unit operation step. It also results in an easier process. If a rennet and natamycin, or an acid and natamycin are added as part of the same stream, for example as part of a composition, the amount of natamycin and rennet, or natamycin and acid in such composition can simply be selected such that the composition is easily added to the milk (e.g. such that the amount is not too little, making dosage difficult, or too much, which leads to undesired dilution of the milk and may affect the cheese).

In one embodiment natamycin is added as a solid, preferably in particulate form, such as a crystalline or amorphous powder, a granulate, liposome etcetera's.

In a further embodiment natamycin is added as a liquid, preferably as a suspension, preferably as a suspension comprising at least particulate natamycin. Such suspension may also comprise some dissolved natamycin.

Preferably the natamycin is crystalline, even more preferably such crystalline natamycin comprises needle-shaped crystals. The production of needle-shaped natamycin is described in WO 2006/045831.

The process of the invention may include adding one or more additional preservatives (other than natamycin). For example, the process may include adding nisin.

In the process of the invention at least part of the natamycin is added to milk before curd formation. The process may comprise adding part of the natamycin before curd formation, and part of the natamycin during or after curd formation. The amount of natamycin added to the milk can simply be determined on the basis of the desired amount of natamycin in the cheese. It may depend on the type and amount of rennet, type and amount of acid, the batch of milk, and temperatures and time, and other conditions deployed in the cheese-making process. A suitable way to determine a suitable amount of natamycin, a simple cheese-making test can be done (preferably on small scale) to establish the weight of the curd and the yield of natamycin in the curd / cheese. By way of example, if under the selected conditions, and with the particular type and batch of milk and rennet, 80 wt% of the natamycin ends up in the curd, and the amount of curd thus produced is 0.2 kg grams per kg of milk, in order to arrive at an amount of 10 ppm (0.001 wt%) of natamycin in the curd (after removal of whey) the amount of natamycin to be added to the milk is 2.5 ppm ([10 x 0.2] / 0.8).

Preferably at least 50 wt% of natamycin added in the process is added before curd formation, more preferably at least 60 wt%, at least 70 wt%, more preferably at least 80 wt%, at least 90wt%, most preferably all natamycin added in the process is added before curd formation.

The amount of natamycin in milk and curd can be determined by methods known to the skilled person. Natamycin can be analysed with HPLC. Natamycin analysis in cheese is described in IDF 140-2 (ISO9233-2).

In an embodiment the amount of natamycin added to the milk is such that the final amount in the curd is between 1 and 100 ppm, preferably between 2.5 and 20 ppm, more preferably between 5 and 15 ppm, based on the weight of the milk.

In another embodiment the amount of natamycin added to the milk is between 0.05 and 10 ppm, preferably between 0.1 and 5 ppm, more preferably between 0.2 and 2.5 ppm, more preferably between 0.5 and 1 ppm, based on the weight of the milk.

In the context of the invention, the "amount of natamycin" refers to the actual amount of natamycin. For example, if the natamycin is added to the milk in the form of a 4 wt% suspension, and the desired amount of natamycin added to the milk is 0.8 ppm, the amount of *suspension* to be added to the milk is 20 ppm (0.8 ppm / 0.04) based on the weight of the milk.

The skilled person will appreciate that the process of the invention may also be used on the production of curd. Therefore, the invention also provides a process to produce a curd, said process comprising the step of adding natamycin, characterized in that at least part of the natamycin is added to milk before curd formation.

In a further aspect the invention provides a curd obtainable by the process of the invention. In yet another aspect the invention provides a cheese obtainable by the process of the invention.

The curd or cheese of the invention is characterized in that the natamycin is distributed throughout the curd or cheese. The natamycin of the curd or cheese of the invention is not necessarily evenly distributed. As compared to the natamycin-stabilized curds or cheeses of the prior art, in which the natamycin is primarily located at the surface, or a few mm to a cm towards the inside, in the curd or cheese of the invention the natamycin is distributed throughout the cheese. For example, the concentration of natamycin at the center of the cross section of the curd or cheese may be at least 10% w/v, preferably at least 20% w/v, more preferably at least 30%, 40%, more preferably at least 50% w/v relative to the concentration of the natamycin at the surface of the curd or cheese. Most preferably the concentration of natamycin at the center of the cross section of the curd or cheese is the same. This can be established e.g. by taking a sample of the cheese (e.g. 1 cm³) at the very center of the curd or cheese, measure the natamycin content of this sample using known methods, and comparing this with a curd or cheese sample taken at or just below (e.g. 2 mm below) the surface, for example by taking a 1 cm² sample from 2 to 12 mm depth.

In a further aspect the invention comprises a composition comprising a rennet and natamycin. Such a composition may be a liquid composition such as a suspension, in which the rennet may be dissolved and the natamycin is at least partially crystalline. Such composition is particularly useful in the production of microbiologically stable cheese.

In another aspect the invention comprises a composition comprising natamycin and a starter. A starter is a culture which is added to the milk. Such composition is particularly useful in the production of microbiologically stable cheese. The composition may also comprise natamycin, a rennet, and a starter.

In yet another aspect the invention provides the use of the composition of the invention in the production of cheese, particularly fresh cheese.

### Example

To 1 kg of milk was added 100 mg of crystalline natamycin. Next the milk was heated to 46°C, then 80 µl rennet (Maxiren 600, available from DSM Food Specialties, Delft, the Netherlands) and CaCl₂ were added, and the milk was incubated for 45 minutes. The formed curd was cut and stirred for 15 minutes. The whey was drained and the curd was left to stand for 1 hour at room temperature, then milled and salted (4.3 g). Next the curd was left for one hour at room temperature and for 3 hours at 10°C. For analysis, the cheese was grated and analysed. Analysis was done according to IDF 140-2. Results are in Table 1.

**Table 1**

| Experiment | 1 | 2 |
|---|---|---|
| Weight of cheese | 165 grams | 165 grams |
| Measured [natamycin] in cheese | 323 ppm | 515 ppm |
| Corresponds to | (323 x 165)/1000 = 53 mg | (515 x 165)/1000 = 85 mg |
| Volume of whey | 835 ml | 835 ml |
| Measured [natamycin] in whey | 44 ppm | 23 ppm |
| Corresponds to | (44 x 835)/1000 = 37 mg | (23 x 835)/1000 = 19 mg |
| Total amount of natamycin | 53 + 37 = 90 mg | 85 + 19 = 104 mg |
| Yield of natamycin | 90 / 100 = 90% | 104 / 100 = 104% |

Whereas the curd fraction only made up some 16% of the volume after curdling, it contained 53-85% of all natamycin added to the milk. This shows that the natamycin preferentially ends up in the curd fraction. The experiment was done with a relatively high amount of natamycin, and it can also be done using lower amounts of natamycin.

## Claims

1. Process to produce a microbiologically stable fresh cheese, said process comprising the step of adding natamycin, **characterized in that** at least part of the natamycin is added to milk before curd formation.

2. Process according to claim 1 wherein the cheese is a selected from fromage frais, fromage blanc, labneh, curd cheese, farmer cheese, queso fresco, quark, queso blanco, paneer, fresh goat's milk chèvre, Petit Suisse, cottage cheese, mascarpone, mozzarella, and buffalo cheese.

3. Process according to any one of claim 1-2 wherein the natamycin is added to the milk prior to adding a rennet or acid.

4. Process according to any one of claim 1-3 wherein the natamycin is added to the milk together with a rennet or acid.

5. Process according to any of claim 1-4 wherein the natamycin is added as a suspension.

6. Process according to claim 5 wherein the natamycin is crystalline.

7. Process according to claim 6 wherein the crystalline natamycin comprises needle-shaped crystals.

8. Process according to any one of claim 1-7 wherein the amount of natamycin added before curd formation is such that the final amount on the curd is between 0.25 and 25 ppm based on the weight of the milk.

9. Fresh cheese obtainable by the process according to any one of claims 1-8.

10. Process to produce a curd, said process comprising the step of adding natamycin, **characterized in that** at least part of the natamycin is added to milk before curd formation.

11. Curd obtainable by the process according to claim 10.

12. Composition comprising a rennet and natamycin.

13. Use of the composition of claim 12 in the production of a microbiologically stable fresh cheese.

## Patentansprüche

1. Verfahren zur Herstellung eines mikrobiologisch stabilen Frischkäses, wobei das Verfahren den Schritt des Zugebens von Natamycin umfasst, **dadurch gekennzeichnet, dass** wenigstens ein Teil des Natamycins vor der Käsebruchentstehung zu Milch zugegeben wird.

2. Verfahren gemäß Anspruch 1, wobei der Käse ausgewählt ist aus Fromage Frais, Fromage Blanc, Labneh, Quarkkäse, Weißkäse, Queso Fresco, Quark, Queso Blanco, Paneer, Ziegenfrischkäse, Petit Suisse, Hüttenkäse, Mascarpone, Mozzarella und Büffelkäse.

3. Verfahren gemäß einem der Ansprüche 1-2, wobei das Natamycin vor dem Zugeben eines Labs oder einer Säure zu der Milch zugegeben wird.

4. Verfahren gemäß einem der Ansprüche 1-3, wobei das Natamycin zusammen mit einem Lab oder einer Säure zu der Milch zugegeben wird.

5. Verfahren gemäß einem der Ansprüche 1-4, wobei das Natamycin als Suspension zugegeben wird.

6. Verfahren gemäß Anspruch 5, wobei das Natamycin kristallin ist.

7. Verfahren gemäß Anspruch 6, wobei das kristalline Natamycin nadelförmige Kristalle umfasst.

8. Verfahren gemäß einem der Ansprüche 1-7, wobei die Menge an Natamycin, die vor der Käsebruchentstehung zugegeben wird, so ist, dass die Endmenge in dem Käsebruch zwischen 0,25 und 25 ppm bezogen auf das Gewicht der Milch beträgt.

9. Frischkäse, erhältlich durch das Verfahren gemäß einem der Ansprüche 1-8.

10. Verfahren zum Herstellen eines Käsebruchs, wobei das Verfahren den Schritt des Zugebens von Natamycin umfasst, **dadurch gekennzeichnet, dass** wenigstens ein Teil des Natamycins vor der Käsebruchentstehung zu Milch zugegeben wird.

11. Käsebruch, erhältlich durch das Verfahren gemäß Anspruch 10.

12. Zusammensetzung, umfassend ein Lab und Natamycin.

13. Verwendung der Zusammensetzung gemäß Anspruch 12 bei der Herstellung eines mikrobiologisch stabilen Frischkäses.

## Revendications

1. Procédé de production d'un fromage frais microbiologiquement stable, ledit procédé comprenant l'étape consistant à ajouter de la natamycine, et étant **caractérisé en ce qu'**au moins une partie de la natamycine est ajoutée au lait avant la formation du caillé.

2. Procédé selon la revendication 1, dans lequel le fromage est choisi parmi le fromage frais, le fromage blanc, le labneh, le curd cheese, le farmer cheese, le queso fresco, le quark, le queso blanco, le paneer, le chèvre au lait de chèvre frais, le Petit Suisse, le cottage cheese, le mascarpone, la mozzarella et le fromage de bufflonne.

3. Procédé selon l'une quelconque des revendications 1 à 2, dans lequel la natamycine est ajoutée au lait avant l'ajout d'une présure ou d'un acide.

4. Procédé selon l'une quelconque des revendications 1 à 3, dans lequel la natamycine est ajoutée au lait en même temps qu'une présure ou un acide.

5. Procédé selon l'une quelconque des revendications 1 à 4, dans lequel la natamycine est ajoutée sous la forme d'une suspension.

6. Procédé selon la revendication 5, dans lequel la natamycine est cristalline.

7. Procédé selon la revendication 6, dans lequel la natamycine cristalline comprend des cristaux aciculaires.

8. Procédé selon l'une quelconque des revendications 1 à 7, dans lequel la quantité de natamycine ajoutée avant la formation du caillé est telle que la quantité finale sur le caillé est comprise entre 0,25 et 25 ppm par rapport au poids du lait.

9. Fromage frais pouvant être obtenu par le procédé selon l'une quelconque des revendications 1 à 8.

10. Procédé de production d'un caillé, ledit procédé comprenant l'étape consistant à ajouter de la natamycine, et étant **caractérisé en ce qu'**au moins une partie de la natamycine est ajoutée au lait avant la formation du caillé.

11. Caillé pouvant être obtenu par le procédé selon la revendication 10.

12. Composition comprenant une présure et de la natamycine.

13. Utilisation de la composition de la revendication 12 dans la production d'un fromage frais microbiologiquement stable.
